# EUROPEAN PATENT APPLICATION

(11) **EP 1 260 638 A1**
(43) Date of publication of application: **27.11.2002**
(21) Application number: 02253234.5
(22) Date of filing: 08.05.2002
(51) Int. Cl.: E02F 9/28

(54) **Tooth, tooth holder and tooth mounting system**

(30) Priority: 09.05.2001 GB 0111250
(71) Applicant: Euro Stone Clear Limited, Hexham NE47 0YT (GB)
(72) Inventor: Dixon, Roy, Hexham, NE47 OYT. (GB)
(74) Representative: Brown, Michael Stanley

(57) **Abstract**

A tooth and tooth holder system is provided, in which the tooth holder (B) includes a channel within which a part of the tooth (A) can be engaged in such manner that sliding movement of the tooth (A) can be effected relative to the tooth holder (B). A wall of the channel includes a stop (10) against which a complementary portion (4) of the tooth (A) can be held to prevent sliding movement of the tooth (A) relative to the tooth holder (B).

## Description

### Field of the Invention

This invention relates to a tooth and tooth holder system and is concerned with the provision of a new design of tooth and a method or system by which the tooth fits into the tooth holder.

This new system may be utilized in soil engaging machinery such as soil and stone harvesters, stone burying machinery, land-mine removal machinery and cultivation machinery used in industries such as mining, forestry, civil engineering, agriculture and clearing land-mines.

There are many drawbacks with conventional tooth and tooth holder systems. These include the high cost of the standard tooth or blade nut and bolt system, the awareness and time taken to change a blade, the design weakness causing blades to often bend, the speed in which they wear out, the low amount of soil they carry over the rotor, the fact that they can easily cause the whole rotor to become blocked in wet conditions, the paddle effect causing soil compaction, stones easily becoming jammed, not being able to work in wet conditions and the bolt holes becoming worn and oval shaped making it nearly impossible to keep the blades or teeth fixed tight to the main rotor shaft.

An object of the present invention is to provide a low cost, long-lasting soil-engaging tooth.

Another object of the present invention is to provide an improved tooth and tooth holder system for the purposes outlined above.

### Summary of the Invention

According to a first aspect of the present invention there is provided a tooth and tooth holder system, in which the tooth holder includes a channel within which a part of the tooth can be engaged in such manner that sliding movement of the tooth can be effected relative to the tooth holder, and in which a wall of the channel includes a stop against which a complementary portion of the tooth can be held to prevent sliding movement of the tooth relative to the tooth holder.

The stop is preferably afforded by a down-turned end of an in-turned leg of one of the side walls of the channel, while the complementary formation of the tooth is preferably a rolled over formation which acts as a holding lug. There are preferably two such lugs. The lugs and adjacent part of the tooth provide a generally U-shaped formation.

The lugs are preferably held in engagement with the stop by means of a roll pin, which may be an S-shaped roll pin, which can be knocked in position within the channel, which forms a U-shaped part of the tooth holder.

According to a second aspect of the present invention there is provided a tooth having the specific features defined above.

According to a third aspect of the present invention there is provided a tooth holder having the specific features referred to above.

Advantages of the tooth and tooth holder system of the present invention include the following:-
a) a used worn tooth can be quickly detached from the tooth holder by knocking out the double roll pin thus allowing the tooth to be slid forward dislocating the rear holding lugs from the holder. The tooth can then be tilted forward pivoting the front bottom U part of the tooth against the front U part of the holder until the tooth becomes completely free of the tooth holder,
b) a new tooth can be quickly re-attached to the tooth holder by following the above instructions in reverse order,
c) the teeth and holders can be constructed by stamping the correct shapes out of hot quality steel, forming and welding. There is the option to braise or sweat in a tungsten type hard-wearing face to the front of the tooth, and
d) a multitude of varying shapes, thickness and sizes of teeth can be produced for different purposes following this new manufacturing and fitting/coupling system.

This new and innovative design of tooth and holder system can also be used on the new "once over" type agricultural, soil preparation and crop planting machinery. Machines fitted with the new tooth and tooth holder system can cultivate the soil in such a way as to turn in the old vegetation via a horizontal rotor method rather than the old vertical blade method.

### Brief Description of the Drawings

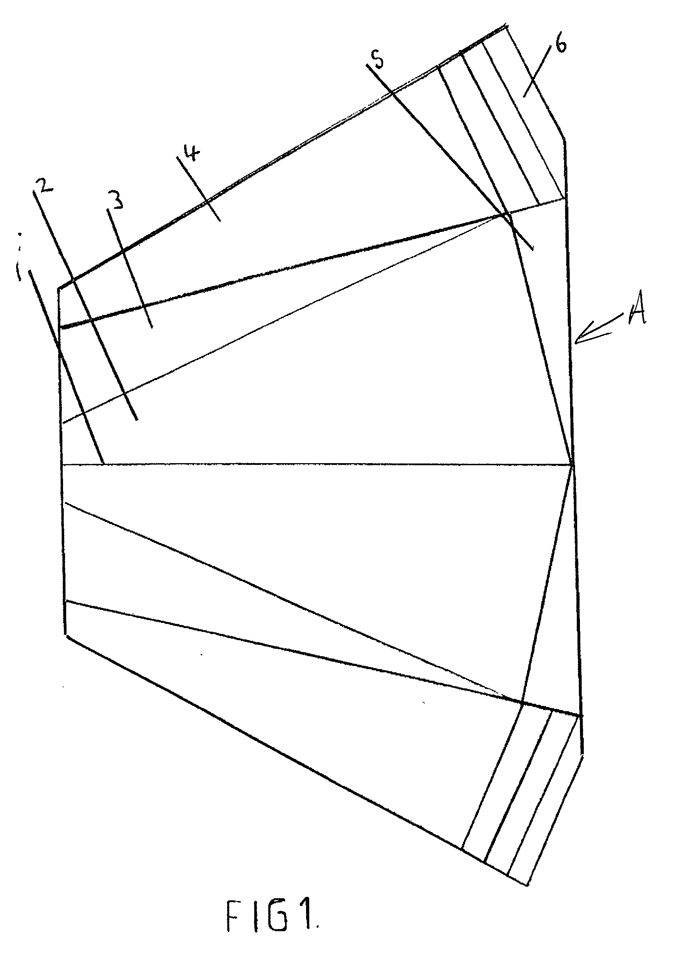

Figure 1 illustrates the shape of the material to be used to produce a tooth prior to the forming process,
Figure 2 illustrates the shape of the material to be used to produce a tooth holder prior to the forming process,
Figure 3 illustrates a tooth after the forming and welding process,
Figure 4 illustrates a tooth holder after the forming process,
Figure 5 illustrates a tooth position during the fitting process into the tooth holder, and
Figure 6 illustrates the tooth in the final locked, working position with the double roll pin holding the tooth in place.

### Description of the Preferred Embodiment

As shown in the drawings, a tooth A is held in the tooth holder B by lugs that are formed during the manufacturing process by curling up part 6 of the blank from which the tooth A is formed. Both halves of the tooth A are identical so that the part 6 is the same on both sides. Item 4 is the forward-looking soil-throwing face of the tooth A. Strength is provided to the tooth A via a fold in the backbone/spine, 1. This is created by folding the two sides 2. The forward-looking parts of the two sides of the tooth A are joined together by welding together the two sides 2 and the void faces 3 between the soil-throwing faces 4 and the spine 1 can be built up with weld to form a long-wearing hard facing. Alternatively a tungsten carbide block could be soldered into this void for longer wearing.

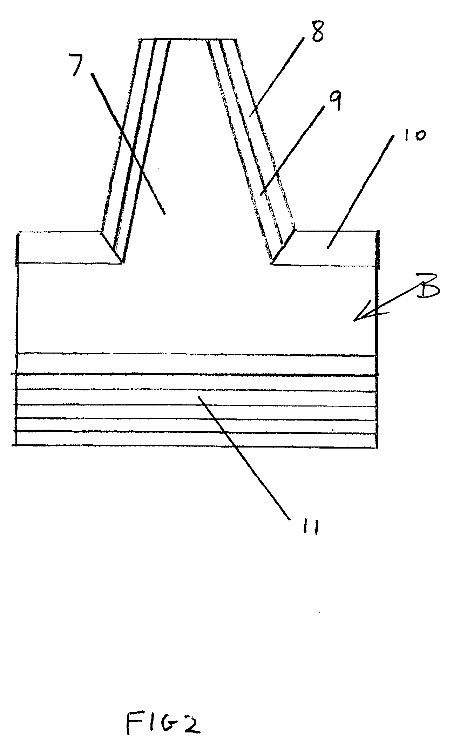

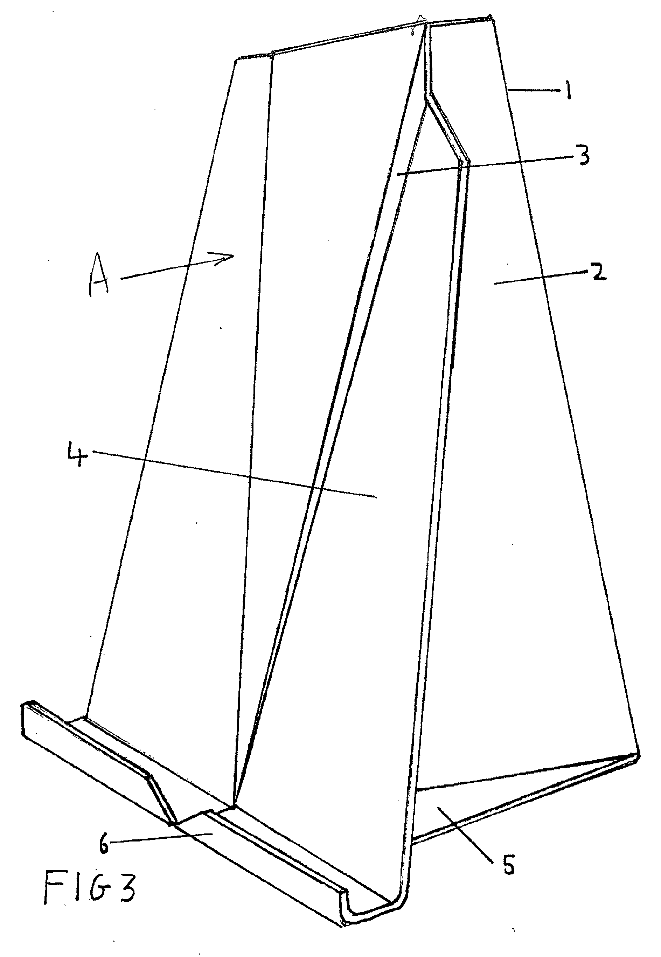

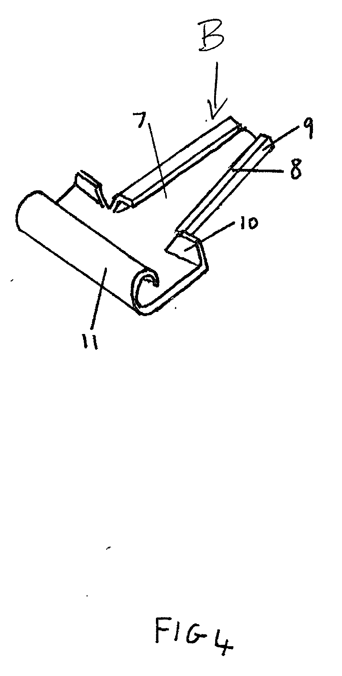

Figure 2 shows the blank from which the tooth holder B is formed before being pressed up into shape. The bottom face 7 is slightly bent allowing it to fit flush with the grinding drum of the host machine to which it is welded. The area 11 of the holder B is curled up to provide a hook-shaped lip for the purpose of hitching the holder and tooth together. The area 10 is folded up to act as a stop and to help give support to the tooth A as shown in Figure 4. The area 8 is folded at a 90 degree angle to the area 7 and then area 9 is folded to a 90 degree angle to 8 thus forming a bracket-type device into which the area 5 of the tooth A in Figure 3 can slide, enabling it to become locked in.

Figure 3 shows the above-mentioned area 5 of the tooth A that is locked into the rear of the tooth holder B, as shown in Figure 4. The soil-throwing face of the tooth A is indicated by reference numeral 4. The strength of the tooth A is derived from the design of the spine as outlined above. As mentioned above, the valley-shaped area 3 could be welded and or filled in with a hard-wearing material such as tungsten carbide to provide a heavier and longer-wearing tooth. The front lip of the tooth A is formed from the parts 6 and this lip fits under the opposite-facing lip 11 of the holder B, as shown in Figure 4.

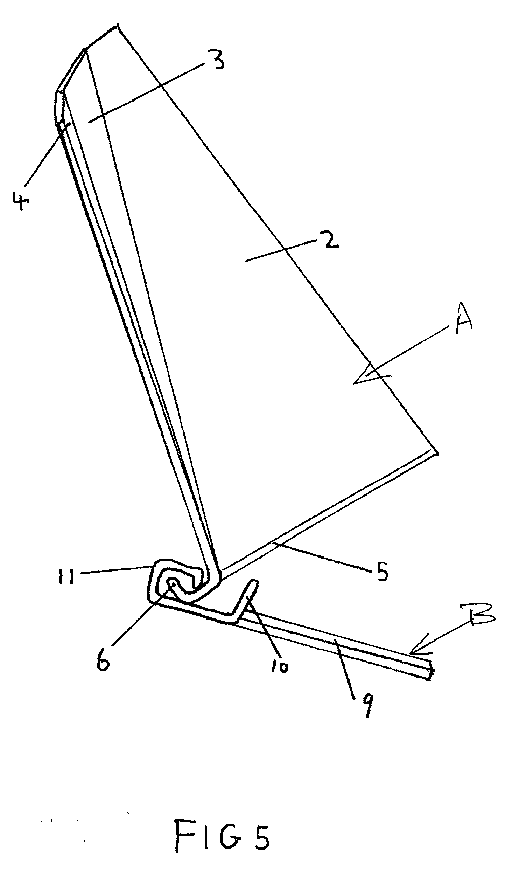

Figure 5 shows the position of the tooth A relative to the tooth holder B prior to the tooth A being slid into a position in which the rear lugs on the tooth 5 become engaged with the rear-locking device 9 of the tooth holder B. Also illustrated in Figure 5 is the side view of the front-locking device of the tooth A formed from parts 6 and the front locking counterpart device 11 of the tooth holder B.

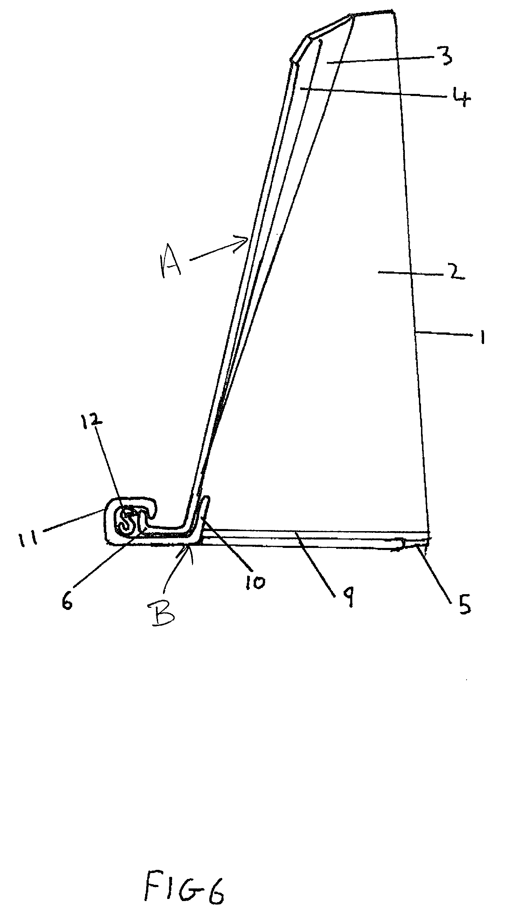

Part 11 is designed in such a way as to allow the tooth A to be slid back and forth in the holder B. Sliding it forward, i.e. to the left as viewed in Figures 5 and 6, releases the rear locking device 9 and sliding it to the back of the holder B locks the rear 5 of the tooth A to the rear locking device 9 of the holder B. This is made possible because the front locking device 11 of the holder B is elongated, allowing the front locking device of the tooth A to slide back and forth inside device 11.

The front locking device formed by parts 6 of the tooth A must be engaged into the front of the locking device 11 of the tooth holder B first, before the rest of the tooth A is set down into the holder B. Once the front parts are locked together and the tooth A is set down into the holder B, the tooth A can then be slid to the back of the holder B, i.e. to the right as viewed in Figures 5 and 6, thus simultaneously activating the rear locking system.

Figure 6 shows the final locked position including an S-shaped roll pin 12 that locks the tooth A and tooth holder B together by filling and jamming up the void created when the tooth A was slid to the back of the holder B. With the roll pin 12 in place, the tooth A is now unable to slide forward thus not allowing the rear-locking device to become unhitched.

To remove a worn tooth A and replace it with a new one, it is a simple matter of knocking out the roll pin 12, sliding the tooth A forward, tilting the rear of the tooth A up out of the back of the holder B and then unhooking the front part. The new tooth is fitted by following the above in reverse order.

As can be seen from Figures 5 and 6, the tooth holder B includes a channel within which the co-operating part of the tooth is received. One wall of the channel is inclined relative to the base of the channel, while the other wall of the channel includes the front locking device 11 which includes an in-turned leg terminating in a down-turned end portion which forms a stop against which the free ends of the parts 6 of the tooth A are pressed by means of the roll pin 12.

## Claims

1. A tooth and tooth holder system, in which the tooth holder (B) includes a channel within which a part of the tooth (A) can be engaged in such manner that sliding movement of the tooth (A) can be effected relative to the tooth holder (B), and in which a wall of the channel includes a stop against which a complementary portion of the tooth (A) can be held to prevent sliding movement of the tooth (A) relative to the tooth holder (B).

2. A tooth and tooth holder system as claimed in Claim1, in which the stop is afforded by a down-turned end of an in-turned leg of one of the side walls of the channel.

3. A tooth and tooth holder system as claimed in Claim 2, in which the complementary formation of the tooth (A) is a rolled over formation which acts as a holding lug.

4. A tooth and tooth holder system as claimed in Claim 3, in which there are two holding lugs.

5. A tooth and tooth holder system as claimed in Claim 4, in which the lugs and the adjacent part of the tooth (A) provide a generally U-shaped formation.

6. A tooth and tooth holder system as claimed in Claim 4 or Claim 5, in which the lugs are held in engagement with the stop by means of a roll pin (12).

7. A tooth and tooth holder system as claimed in Claim 6, in which the roll pin is an S-shaped roll pin, which can be knocked in position within the channel which forms a U-shaped part of the tooth holder (B).

8. A tooth forming part of a tooth and tooth holder combination as claimed in any one of Claims 1 to 5.

9. A tooth holder forming part of a tooth and tooth holder combination as claimed in any one of Claims 1 to 5.
